# EUROPÄISCHE PATENTSCHRIFT

(11) **EP 3 733 329 B1**
(45) Veröffentlichungstag und Bekanntmachung des Hinweises auf die Patenterteilung: **13.07.2022**
(21) Anmeldenummer: 20172087.7
(22) Anmeldetag: 29.04.2020
(51) Int. Cl.: B23B 3/24, B23P 6/00, B24B 5/36, F01D 5/00, F03B 11/00

(54) **VORRICHTUNG UND VERFAHREN ZUR INSTANDHALTUNG VON DICHTFLÄCHEN AN ANLAGENTURBINEN**
DEVICE AND METHOD FOR MAINTENANCE OF SEALING SURFACES ON SYSTEM TURBINES
DISPOSITIF ET PROCÉDÉ D'ENTRETIEN DES SURFACES D'ÉTANCHÉITÉ SUR DES TURBINES D'INSTALLATION

(30) Priorität: 03.05.2019 DE 102019111550
(43) Veröffentlichungstag der Anmeldung: 04.11.2020
(73) Patentinhaber: Uniper Anlagenservice GmbH, 45896 Gelsenkirchen (DE)
(72) Erfinder: Graf, Markus, 84036 Landshut (DE); Fleischer, Christoph, 84524 Neuötting (DE)
(74) Vertreter: Moser Götze & Partner Patentanwälte mbB

(56) Entgegenhaltungen:
- EP-A2- 1 688 210
- WO-A1-2005/095032
- US-A1- 2019 111 493

## Beschreibung

Die Erfindung betrifft eine Anordnung mit einer Vorrichtung zur mechanischen Bearbeitung einer Dichtfläche an einer Anlagenturbine gemäß dem Oberbegriff von Anspruch 1 sowie ein Verfahren zur mechanischen Bearbeitung einer solchen Dichtfläche gemäß dem Oberbegriff von Anspruch 7.

Aus der WO 2008 / 043 942 A1 ist eine Vorrichtung zur mechanischen Bearbeitung von Rotoren aus Anlagenturbinen bekannt. Nachteil einer solchen Vorrichtung ist, dass die Rotoren für die mechanische Bearbeitung ausgebaut werden müssen.

Aus der EP 1 688 210 B1 sind ein Verfahren nach dem Oberbegriff des Anspruchs 7 und eine Anordnung nach dem Oberbegriff des Anspruchs 1 mit einer Vorrichtung zur mechanischen Bearbeitung einer Dichtfläche an einer Laufschaufel einer Kaplan-Turbine bekannt. Die mechanische Bearbeitung erfolgt während die Laufschaufel in der Kaplan-Turbine eingebaut ist. Das verwendete Werkzeug ist in einen Ringkörper eingesetzt, wobei ein Großteil des Ringkörpers in einer Nut zwischen der Laufschaufel und einer Laufschaufelaufnahme angeordnet ist. Nachteil einer solchen Vorrichtung ist, dass eine entsprechend große Breite der Nut erforderlich ist.

Demgegenüber besteht die Aufgabe der vorliegenden Erfindung darin, eine verbesserte Vorrichtung und ein verbessertes Verfahren zu schaffen, um eine Ausbesserung von Dichtflächen an Anlagenturbinen mit kleinsten Abständen zwischen Laufschaufel-Aufnahme und darin eingebauter Laufschaufel durchführen zu können.

Diese Aufgabe wird durch eine Vorrichtung mit den Merkmalen des Anspruchs 1 und ein Verfahren mit den Merkmalen des Anspruchs 7 gelöst. Vorteilhafte Ausgestaltungen der Erfindung sind in den abhängigen Ansprüchen 2 bis 6 und 8 sowie der nachfolgenden Beschreibung angegeben.

Erfindungsgemäß wird eine verbesserte Vorrichtung zur mechanischen Bearbeitung einer Dichtfläche an einer Anlagenturbine, wobei die Dichtfläche umlaufend auf dem Außendurchmesser einer Laufschaufel und/oder umlaufend auf dem Innendurchmesser einer Laufschaufel-Aufnahme angeordnet ist, wobei die Laufschaufel in der Laufschaufel-Aufnahme und damit in der Anlagenturbine angeordnet sowie im oberen Bereich der Laufschaufel-Aufnahme umlaufend entsprechend einem zur Abdichtung im Betrieb notwendigen Dichtungsquerschnitt zu dieser beabstandet ist, wodurch zwischen der Laufschaufel und der Laufschaufel-Aufnahme in diesem Bereich eine Nut gebildet wird, wobei die mechanische Bearbeitung mittels eines Bearbeitungswerkzeuges erfolgt, welches sich während der mechanischen Bearbeitung in der Nut befindet und an einer Halterung angeordnet und befestigt ist, dadurch geschaffen, dass die Halterung derart ausgebildet ist, dass diese außerhalb des Außendurchmessers der Nut an der Vorrichtung gelagert und befestigt ist.

Die Laufschaufel ist in der Laufschaufel-Aufnahme drehbar gelagert, um durch Anpassung eines Stellungswinkels den Wirkungsgrad der Anlagenturbine, beispielsweise einer Kaplan-Turbine, zu erhöhen. Zwischen der Laufschaufel und der Laufschaufel-Aufnahme ist Schmiermittel eingesetzt. Um das Ausdringen von Schmiermittel an die Umgebung, wie beispielsweise in das Triebwasser, zu vermeiden, wird durch eine oder mehrere Dichtung(en) in Verbindung mit entsprechenden Dichtflächen an der Laufschaufel und der Laufschaufel-Aufnahme Dichtigkeit hergestellt.

Aufgrund einer Drehbewegung der Laufschaufel kommt es allerdings zu Verschleißerscheinungen an der beziehungsweise den Dichtung(en) und/oder an den Dichtflächen der Laufschaufel und/oder Laufschaufel-Aufnahme, sodass durch eine Wartung beziehungsweise Reparatur die Dichtigkeit aufrechterhalten beziehungsweise wiederhergestellt werden muss. Die Wartung beziehungsweise Reparatur umfasst den Ausbau der gegebenenfalls verschlissene(n) Dichtung(en) und eine mechanische Bearbeitung der Dichtfläche(n).

Die Anlagenturbine ist insbesondere von Baustrukturen umgeben und/oder darin fest verbaut. Für die mechanische Bearbeitung der Dichtfläche(n) wird die Laufschaufel nicht ausgebaut, befindet sich also währenddessen in der Laufschaufel-Aufnahme. Die Wartung beziehungsweise Reparatur erfolgt also ohne ein Zerlegen oder einen Ausbau der Anlagenturbine.

Die erfindungsgemäße Halterung ist außerhalb des Außendurchmessers der Nut an der Vorrichtung gelagert und befestigt. Gelagert bedeutet im Rahmen der Erfindung ein Aufliegen auf einem oder mehreren anderen Bauteil(en) der Vorrichtung und/oder eine Abstützung, insbesondere zur Übertragung von Momenten, an einem oder mehreren anderen Bauteil(en) der Vorrichtung. Befestigt bedeutet im Rahmen der Erfindung eine kraftschlüssige Verbindung, vorzugsweise über eine Verschraubung, zwischen der Halterung und der Vorrichtung. Aber auch eine andere Verbindung, nämlich form- oder stoffschlüssige Verbindung, oder eine Kombination aus kraft- und/oder form- und/oder stoffschlüssiger Verbindung ist denkbar. Vorzugsweise wird die Halterung zusätzlich durch eine entsprechende Konstruktion der Vorrichtung in Umlaufrichtung, insbesondere bei Auftreten von Tangentialkräften, gestützt. Hierdurch wird eine Überlastung im Bereich der Lagerung und Befestigung der Halterung vermieden.

Aufgrund der erfindungsgemäßen Halterung kann die mechanische Bearbeitung einer Dichtfläche an einer Laufschaufel und/oder Laufschaufel-Aufnahme bei geringeren Nutbreiten, insbesondere bei Nutbreiten kleiner als 40 mm, durchgeführt werden. Die Lagerung und Befestigung der Halterung außerhalb des Außendurchmessers der Nut hat den Vorteil, dass die Halterung in diesem Bereich entsprechend der für die Übertragung der auftretenden Kräfte notwendigen Dimensionierung, im Bereich der Nut allerdings für eine geringe Nutbreite unter Berücksichtigung der Abmessungen des Bearbeitungswerkzeugs ausgelegt werden kann.

Das Bearbeitungswerkzeug ist vorzugsweise ein Drehwerkzeug, insbesondere ein Drehmeißel. Aber auch andere Bearbeitungswerkzeuge, wie beispielsweise ein Schleifwerkzeug, sind denkbar. Das Bearbeitungswerkzeug kann mittels der Halterung, insbesondere in dem Anstellwinkel bezogen auf die Dichtfläche und/oder in der Höhe bezogen auf die Nut, verstellt werden. Das Bearbeitungswerkzeug ist vorzugsweise in der Halterung in einer entsprechenden Aufnahme angeordnet und befestigt. Es ist jedoch auch denkbar, dass das Bearbeitungswerkzeug außen an der Halterung angeordnet und befestigt ist.

In besonders vorteilhafterweise ist das Bearbeitungswerkzeug an der Halterung derart anordbar, dass wahlweise die Dichtfläche umlaufend auf dem Außendurchmesser der Laufschaufel oder die Dichtfläche umlaufend auf dem Innendurchmesser der Laufschaufel-Aufnahme bearbeitbar ist. Die Halterung verbleibt hierfür an der Vorrichtung, das heißt, sie muss nicht demontiert und wieder montiert werden.

Mit anderen Worten kann das Bearbeitungswerkzeug, mit dessen für die mechanische Bearbeitung verwendeten Seite, in verschiedene Richtungen an der Halterung angeordnet und vorzugsweise befestigt werden. Das Bearbeitungswerkzeug kann in Richtung der Dichtfläche, welche umlaufend auf dem Außendurchmesser der Laufschaufel angeordnet ist, an der Halterung angeordnet werden. Das Bearbeitungswerkzeug kann aber auch in Richtung der Dichtfläche, welche umlaufend auf dem Innendurchmesser der Laufschaufel-Aufnahme angeordnet ist, an derselben Halterung angeordnet werden.

Hierdurch ist es möglich, die Dichtfläche auf dem Außendurchmesser der Laufschaufel und auf dem Innendurchmesser der Laufschaufel-Aufnahme mit derselben Halterung und mit demselben Bearbeitungswerkzeug mechanisch zu bearbeiten. Der Einsatz mehrerer Halterungen oder Bearbeitungswerkzeuge ist nicht erforderlich, aber prinzipiell möglich.

Die erfindungsgemäße Vorrichtung wird mit der Laufschaufel-Aufnahme, vorzugsweise mittels eines Befestigungsrings, verbunden, vorzugsweise verschraubt. Aber auch andere Verbindungen und Verbindungselemente sind denkbar.

Besonders vorteilhaft kann vorgesehen sein, dass die Vorrichtung eine Lagereinrichtung umfasst, welche einen außerhalb des Außendurchmessers der Nut, vorzugsweise umlaufend, angeordneten Lagerring umfasst. Der Lagerring wird von dem beweglichen Teil der Vorrichtung umfasst. Die Halterung kann beispielsweise zumindest teilweise an dem Lagerring gelagert und mit diesem verbunden, insbesondere verschraubt werden. Aber auch andere Anordnungen der Halterung und des Lagerrings oder einteilige Ausführungen, das heißt eine Kombination aus Lagerring und Halterung, sind denkbar.

Besonders vorteilhaft kann zudem vorgesehen sein, dass die Lagereinrichtung Lagerhülsen, in welche der Lagerring im Bereich seines Außendurchmessers eingreift, umfasst. Die Lagerhülsen werden vom nicht beweglichen Teil der Vorrichtung umfasst und werden vorzugsweise mit dem Befestigungsring oder mit der Laufschaufelaufnahme verbunden, vorzugsweise verschraubt. Aber auch andere Verbindungen und Verbindungselemente sind denkbar. Der Lagerring greift in entsprechend an dessen Form im Bereich des Außendurchmessers angepasste Aufnahmen an den Lagerhülsen ein. Vorzugsweise ist die Aufnahme keilförmig ausgebildet, so dass Radial- und Axialkräfte übertragen werden können.

Mittels der Lagereinrichtung wird also der bewegliche Teil der Vorrichtung an dem nicht beweglichen Teil der Vorrichtung gelagert, insbesondere während eines Stillstands an diesem abgestützt und während einer Rotationsbewegung an diesem geführt. Besonders vorteilhaft ist eine verstellbare Lagereinrichtung vorgesehen, welche beispielsweise über den Durchmesser der Lagerhülsen oder eine angepasste Lagerung der Lagerhülsen, beispielsweise mittels einer exzentrischen Stützhülse, oder die Form der Aufnahme für den Lagerring so angepasst werden kann, dass insbesondere eine Exzentrizität an der Dichtfläche der Laufschaufel oder der Laufschaufel-Aufnahme bei der mechanischen Bearbeitung berücksichtigt werden kann.

Die Lagereinrichtung ist vorzugsweise eine Rollenlagereinrichtung, das heißt, dass die Lagerhülse, beispielsweise gegenüber einer Stützhülse, rotatorisch gelagert ist und sich bei Rotationsbewegung des Lagerrings um die eigene Achse drehen kann. Diese Achse kann mit der Mittelachse der vorzugsweise zur Befestigung der Lagerhülse an einem der übrigen Elemente des nicht beweglichen Teils der Vorrichtung verwendeten Schrauben übereinstimmen oder exzentrisch zu dieser verlaufen. Zudem kann zwischen Lagerring und Lagerhülse ein Gleitmittel verwendet oder die Oberfläche des Lagerrings und/oder der Lagerhülse können entsprechend beschichtet werden.

Die erfindungsgemäße Ausführung und Anordnung der gesamten Lagereinrichtung außerhalb des Außendurchmessers der Nut hat den Vorteil, dass hierdurch die durch die Halterung ermöglichten geringeren Nutbreiten, insbesondere Nutbreiten kleiner als 40 mm, gewährleistet werden können.

In bevorzugter Weise umfasst die Vorrichtung eine Antriebseinrichtung, welche einen, vorzugsweise elektrisch betriebenen, Motor umfasst.

Mittels der Antriebseinrichtung kann der bewegliche Teil der Vorrichtung derart angetrieben werden, dass dieser sich um die Laufschaufel rotatorisch bewegt. Hierdurch kann das Bearbeitungswerkzeug entlang einer Dichtfläche bewegt werden, um diese mechanisch zu bearbeiten. Der Motor ist entsprechend der bei der mechanischen Bearbeitung auftretenden Kräfte dimensioniert.

Besonders vorteilhaft ist vorgesehen, dass die Vorrichtung ein Zahnradgetriebe umfasst, welches einen außerhalb des Außendurchmessers der Nut, vorzugsweise umlaufend, angeordneten Zahnkranz umfasst.

Mittels des Zahnradgetriebes kann eine Übertragung der von der Antriebseinheit erzeugten Antriebskräfte erfolgen. Der Zahnkranz wird von dem beweglichen Teil der Vorrichtung umfasst und kann beispielsweise mit einem Zahnrad an der Ausgangswelle des Motors (nicht beweglicher Teil) zur Übertragung der Antriebskräfte kämmen. Der Einsatz von weiteren Übersetzungsstufen in dem Zahnradgetriebe ist denkbar, um die Drehzahl beziehungsweise das Drehmoment entsprechend der Anforderungen an die Vorrichtung variieren zu können.

Erfindungsgemäß wird ein verbessertes Verfahren zur mechanischen Bearbeitung einer Dichtfläche an einer Anlagenturbine, wobei die Dichtfläche umlaufend auf dem Außendurchmesser einer Laufschaufel und/oder umlaufend auf dem Innendurchmesser einer Laufschaufel-Aufnahme angeordnet ist, wobei die Laufschaufel in der Laufschaufel-Aufnahme angeordnet und im oberen Bereich der Laufschaufel-Aufnahme umlaufend entsprechend einem zur Abdichtung im Betrieb notwendigen Dichtungsquerschnitt zu dieser beabstandet ist, wodurch zwischen der Laufschaufel und der Laufschaufel-Aufnahme in diesem Bereich eine Nut gebildet wird, wobei die mechanische Bearbeitung mittels eines Bearbeitungswerkzeuges erfolgt, welches sich während der mechanischen Bearbeitung in der Nut befindet und an einer Halterung angeordnet und befestigt ist, dadurch geschaffen, dass die Halterung außerhalb des Außendurchmessers der Nut an der Vorrichtung gelagert und befestigt wird, und die Dichtfläche umlaufend auf dem Außendurchmesser der Laufschaufel oder die Dichtfläche umlaufend auf dem Innendurchmesser der Laufschaufel-Aufnahme bearbeitet wird.

Besonders vorteilhaft ist vorgesehen, dass nacheinander die Dichtfläche umlaufend auf dem Außendurchmesser der Laufschaufel und die Dichtfläche umlaufend auf dem Innendurchmesser der Laufschaufel-Aufnahme bearbeitet werden oder umgekehrt, wobei dazu lediglich das Bearbeitungswerkzeug an der Halterung in radialer Richtung gewendet angeordnet wird.

Das Bearbeitungswerkzeugs kann also beispielsweise nach Abschluss der mechanischen Bearbeitung der Dichtfläche am Innendurchmesser der Laufschaufel-Aufnahme von der Halterung entfernt und mit dessen für die mechanische Bearbeitung verwendeten Seite in Richtung der Dichtfläche am Außendurchmesser der Laufschaufel an der Halterung angeordnet und befestigt werden, um anschließend diese Dichtfläche zu bearbeiten.

Ob beide Dichtflächen bearbeitet werden müssen sowie eine Reihenfolge, in der die Dichtflächen bearbeitet werden sollen, werden beispielsweise vom Nutzer der Vorrichtung festgelegt.

Nach der mechanischen Bearbeitung der Dichtfläche(n) kann/können eine oder mehrere geeignete, insbesondere neue, Dichtung(en) wieder eingebaut werden.

Weitere Details der Erfindung ergeben sich aus der nachfolgenden Beschreibung von Ausführungsbeispielen anhand der Zeichnung, in der
Fig. 1 eine schematische Darstellung einer Ausführungsform der erfindungsgemäßen Vorrichtung,
Fig. 2 eine schematische Darstellung einer Ausführungsform der erfindungsgemäßen Lagereinrichtung,
Fig. 3 eine schematische Darstellung einer Ausführungsform der dem nicht beweglichen Teil der Vorrichtung zugehörigen Elemente der erfindungsgemäßen Lagereinrichtung,
Fig. 4 eine schematische Darstellung einer Ausführungsform der erfindungsgemäßen Halterung in eingebautem Zustand und
Fig. 5 bis Fig. 6b eine schematische Darstellung einer Ausführungsform der erfindungsgemäßen Halterung bei verschiedenen Anordnungen des Bearbeitungswerkzeuges zeigen.

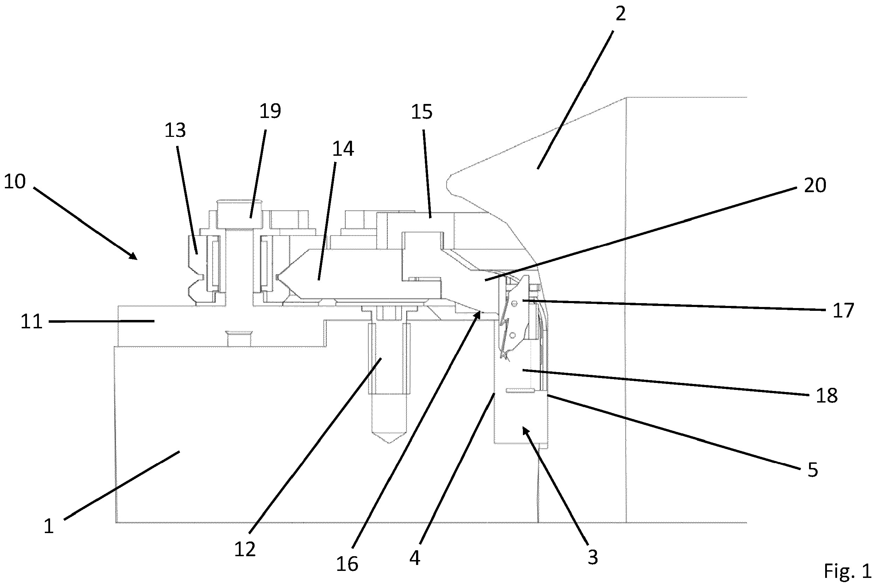

Die Figur 1 zeigt eine schematische Darstellung der erfindungsgemäßen Vorrichtung 10. Diese ist in der Darstellung bereits mit einer Laufschaufel-Aufnahme 1 einer Kaplan-Turbine über einen Befestigungsring 11 und Befestigungsschrauben 12 verbunden.

Die Laufschaufel 2 ist in der Laufschaufel-Aufnahme 1 angeordnet. Im oberen Bereich der Laufschaufel-Aufnahme 1 ist diese von der Laufschaufel umlaufend beabstandet. Hierdurch wird zwischen der Laufschaufel 2 und der Laufschaufel-Aufnahme 1 in diesem Bereich eine Nut 3 gebildet. Im Betrieb ist in dieser Nut 3 die zur Abdichtung notwendige Dichtung (nicht dargestellt) angeordnet.

Die Laufschaufel-Aufnahme 1 umfasst eine in der Nut 3 umlaufend angeordnete Dichtfläche 4. Die Laufschaufel 2 umfasst eine in der Nut 3 umlaufend angeordnete Dichtfläche 5. Diese Dichtflächen 4, 5 können mit der erfindungsgemäßen Vorrichtung 10 mechanisch bearbeitet werden.

Die Vorrichtung 10 umfasst neben dem Befestigungsring 11 eine Lagereinrichtung, welche mehrere Lagerhülsen 13 und einen Lagerring 14 umfasst, eine Antriebseinrichtung (nicht dargestellt), welche einen elektrischen Motor umfasst, ein Zahnradgetriebe, welches einen Zahnkranz 15 umfasst und eine Halterung 16, welche eine Höhenverstelleinrichtung 18 umfasst und in welcher das Bearbeitungswerkzeug 17 angeordnet ist.

Die Vorrichtung 10 kann in einen beweglichen und in einen nicht beweglichen Teil unterteilt werden. Der nicht bewegliche Teil umfasst den Befestigungsring 11, die Lagerhülsen 13, die Antriebseinrichtung und einen Teil des Zahnradgetriebes. Der bewegliche Teil umfasst den Lagerring 14, den Zahnkranz 15 und die Halterung 16 mit dem Bearbeitungswerkzeug 17.

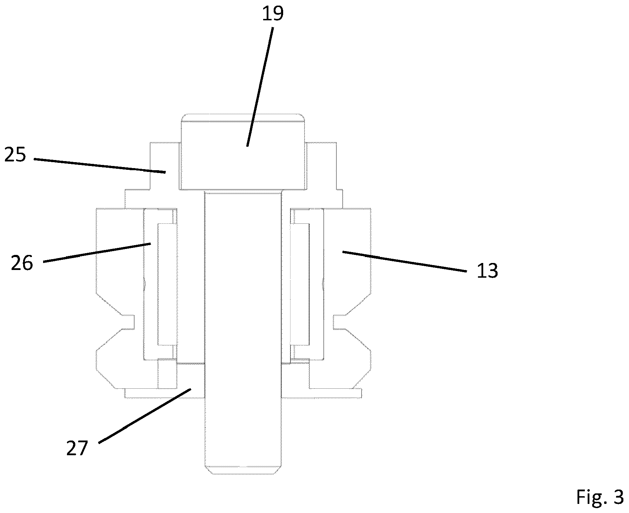

Jede Lagerhülse 13 ist über eine Befestigungsschraube 19 mit dem Befestigungsring 11 verbunden. Die Lagerhülsen 13 können bezüglich ihres Durchmessers oder eine angepasste Lagerung der Lagerhülsen 13, beispielsweise mittels einer exzentrischen Stützhülse 25 (siehe Fig. 3), oder bezüglich der Form der Aufnahme für den Lagerring 14 so angepasst werden kann, dass insbesondere eine Exzentrizität an der Dichtfläche 4, 5 der Laufschaufel 2 oder der Laufschaufel-Aufnahme 1 bei der mechanischen Bearbeitung berücksichtigt werden kann.

Der Lagerring 14 greift im Bereich seines Außendurchmessers in die Lagerhülsen 13 ein. Es ist gut zu erkennen, dass der Lagerring 14 außerhalb des Außendurchmessers der Nut 3 angeordnet ist. Der Lagerring 14 stützt sich während eines Stillstands der Vorrichtung 10 an den Lagerhülsen 13 ab und wird während einer Rotationsbewegung zusätzlich von den Lagerhülsen 13 geführt. Die Lagerhülsen 13 weisen hierzu an die Form des Lagerrings 14 im Bereich dessen Außendurchmessers angepasste Aufnahmen auf, welche keilförmig ausgebildet sind, so dass diese Radial- und Axialkräfte übertragen können.

Die Lagereinrichtung ist eine Rollenlagereinrichtung, das heißt, dass die Lagerhülse 13 gegenüber der Stützhülse 25 rotatorisch gelagert ist und sich bei Rotationsbewegung des Lagerrings 14 um die eigene Achse drehen kann.

Mittels der Antriebseinrichtung kann der bewegliche Teil der Vorrichtung 10 derart angetrieben werden, dass dieser sich um die Laufschaufel 2 rotatorisch bewegt. Hierdurch kann das Bearbeitungswerkzeug 17 entlang einer Dichtfläche 4, 5 bewegt werden, um diese mechanisch zu bearbeiten. Der Motor ist entsprechend der bei der mechanischen Bearbeitung auftretenden Kräfte dimensioniert.

Mittels des Zahnradgetriebes erfolgt eine Übertragung der von der Antriebseinheit erzeugten Antriebskräfte. Der Zahnkranz 15 kämmt mit einem Zahnrad, welches seinerseits mit einem Zahnrad an der Ausgangswelle des Motors kämmt. Es ist gut zu erkennen, dass der Zahnkranz 15 außerhalb des Außendurchmessers der Nut 3 angeordnet ist.

Die Halterung 16 weist eine L-förmige Form auf. Die Halterung 16 ist am Lagerring 14 gelagert und mit diesem über Schrauben (nicht dargestellt) verbunden. Es ist gut zu erkennen, dass die Halterung außerhalb des Außendurchmessers der Nut 3 angeordnet ist.

Das Bearbeitungswerkzeug 17 ist in der Halterung 16 so angeordnet, dass mit ihm die Dichtfläche 4 der Laufschaufel-Aufnahme 1 mechanisch bearbeitet werden kann. Über die Höhenverstelleinrichtung 18 der Halterung 16 kann das Bearbeitungswerkzeug 17 in der Höhe bezogen auf die Nut 3 verstellt werden. Über eine weitere Verstelleinrichtung (nicht dargestellt) kann das Bearbeitungswerkzeug 17 in dem Anstellwinkel bezogen auf die Dichtfläche verstellt werden.

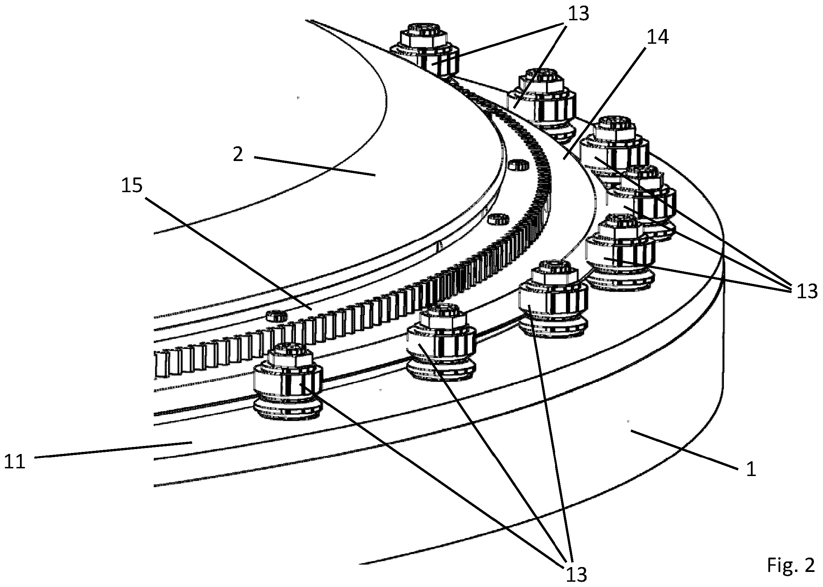

Die Figur 2 zeigt eine schematische Darstellung einer Ausführungsform der erfindungsgemäßen Lagereinrichtung.

Es ist gut zu erkennen, dass die Vorrichtung 10 umlaufend um die Laufschaufel 2 angeordnet ist.

Die Laufschaufel-Aufnahme 1 ist zwar in dieser Darstellung am Außendurchmesser des Befestigungsrings 11 geschnitten dargestellt, erstreckt sich aber weiter.

Es ist außerdem gut zu erkennen, dass für die Lagerung und Führung des Lagerrings 14 mehrere Lagerhülsen 13 verwendet werden und der Lagerring 14 in die Aufnahme der Lagerhülsen 13 eingreift.

Im Übrigen gelten die Ausführungen zu Figur 1 analog auch für die in Figur 2 gezeigte Darstellung.

Die Fig. 3 zeigt eine schematische Darstellung einer Ausführungsform der dem nicht beweglichen Teil der Vorrichtung zugehörigen Elemente der erfindungsgemäßen Lagereinrichtung.

Die Lagerhülse 13 ist über eine Befestigungsschraube 19 mit dem Befestigungsring 11 verbunden, welcher zu dem nicht beweglichen Teil der Vorrichtung gehört. Mittels der Stützhülse 25, welche in diesem Fall exzentrisch ausgeführt ist, und des Gleit- bzw. Rollenelements 26, welches sich rotatorisch um die Stützhülse 25 bewegen kann, wird die Lagerhülse 13 radial gelagert. Das Lagerelement 27 dient der axialen Lagerung des Gleit- bzw. Rollenelements 26.

Im Übrigen gelten die Ausführungen zu den Figuren 1 und 2 analog auch für die in Figur 3 gezeigte Darstellung.

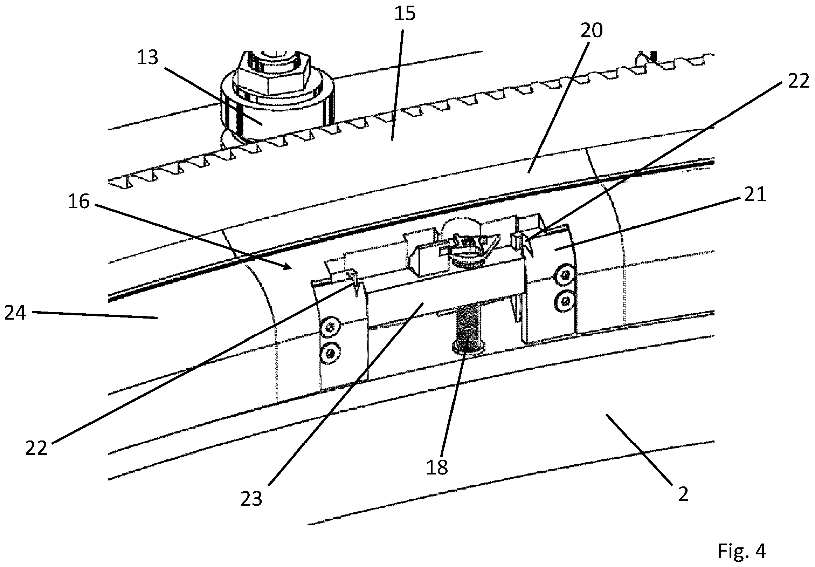

Die Figur 4 zeigt eine schematische Darstellung einer Ausführungsform der erfindungsgemäßen Halterung 16 in eingebautem Zustand.

Die Halterung 16 schließt in Umlaufrichtung an eine Stützkonstruktion 24 an, damit die Halterung 16 in Umlaufrichtung, insbesondere bei Auftreten von Tangentialkräften, gestützt wird.

In der dargestellten Ausführungsform ist die Halterung 16 mehrteilig ausgeführt. Sie umfasst einen Grundkörper 20, ein Führungselement 21 und ein Aufnahmeelement 23. Die Halterung 16 kann aber auch einteilig, zweiteilig oder mehr als dreiteilig ausgeführt sein.

Das Führungselement 21 weist Führungsnuten 22 auf, in denen das Aufnahmeelement 23 aufgenommen und bei einer Verstellung der Höhe bezogen auf die Nut 3 mittels der Höhenverstelleinrichtung 18 geführt werden kann. Die Höhenverstellung 18 erfolgt mechanisch mittels einer Gewindespindel, welche in ein entsprechend ausgelegtes Gewinde in dem Aufnahmeelement hinein oder aus diesem herausgedreht wird und sich dabei an dem Grundkörper abstützt. An dem Aufnahmeelement 23 ist das Bearbeitungswerkzeug 17 befestigt. Das Aufnahmeelement ist derart gestaltet, dass ein Austausch des Bearbeitungswerkzeuges schnell erfolgen kann.

Die Führungsnuten 22 sind so ausgebildet, dass das Aufnahmeelement 23 in zwei Orientierungen aufgenommen werden kann. Dies ist erforderlich, damit das Bearbeitungswerkzeug 17 in Richtung der Dichtfläche 4 der Laufschaufel-Aufnahme 1 oder in Richtung der Dichtfläche 5 der Laufschaufel 2 angeordnet und damit auf einfache Weise gewendet angeordnet werden kann.

Im Übrigen gelten die Ausführungen zu den Figuren 1, 2 und 3 analog auch für die in Figur 4 gezeigte Darstellung.

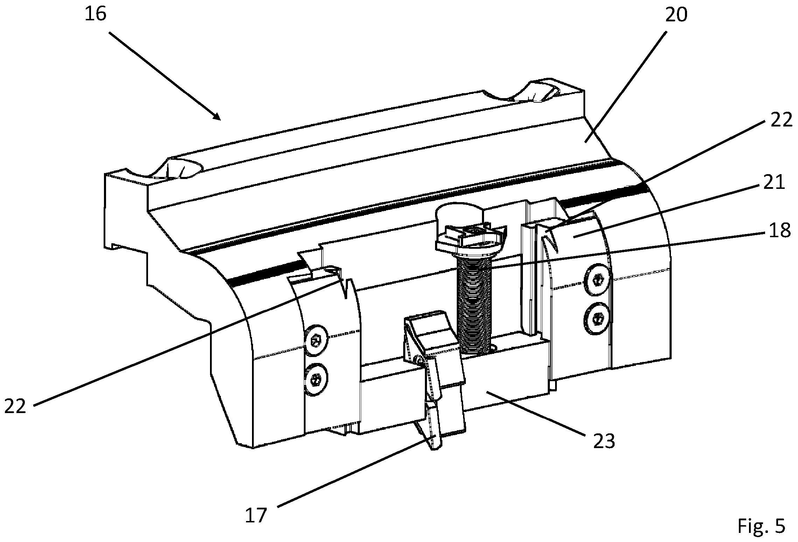

Die Figur 5 zeigt eine schematische Darstellung einer Ausführungsform der erfindungsgemäßen Halterung 16, wobei das Bearbeitungswerkzeug 17 für eine mechanische Bearbeitung der Dichtfläche 5 an der Laufschaufel 2 ausgerichtet ist.

Im Übrigen gelten die Ausführungen zu den Figuren 1, 2, 3 und 4 analog auch für die in Figur 5 gezeigte Darstellung.

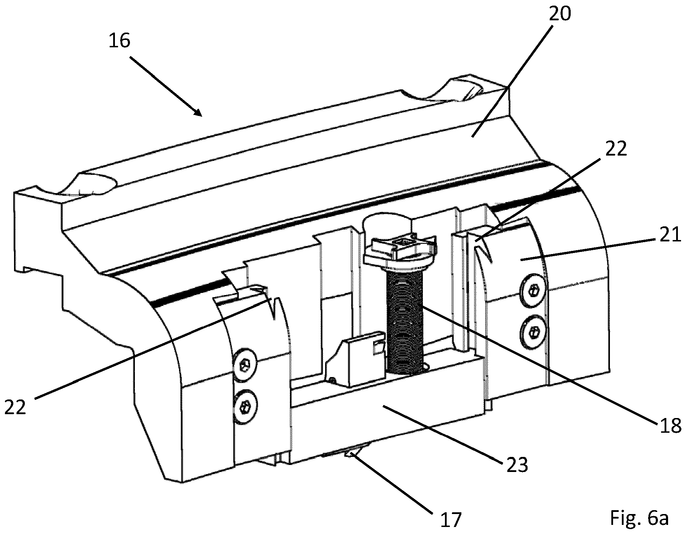

Die Figur 6a zeigt eine schematische Darstellung einer Ausführungsform der erfindungsgemäßen Halterung 16, wobei das Bearbeitungswerkzeug 17 für eine mechanische Bearbeitung der Dichtfläche 4 an der Laufschaufel-Aufnahme 1 ausgerichtet ist.

Im Übrigen gelten die Ausführungen zu den Figuren 1, 2, 3, 4 und 5 analog auch für die in Figur 6a gezeigte Darstellung.

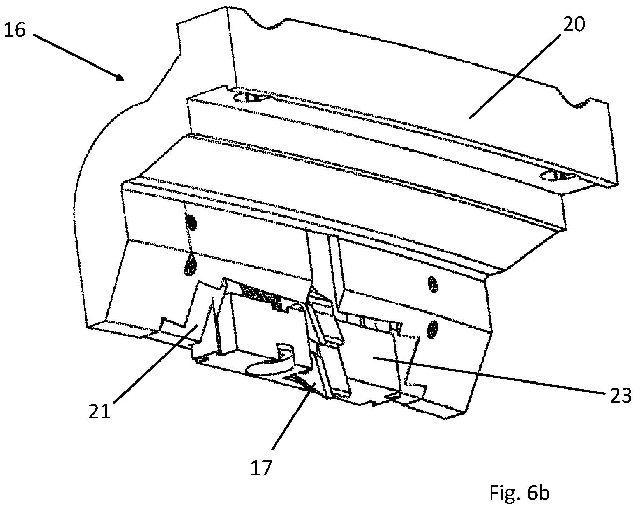

Die Figur 6b zeigt die schematische Darstellung einer Ausführungsform der erfindungsgemäßen Halterung 16 gemäß Figur 6a aus einer anderen Perspektive.

Im Übrigen gelten die Ausführungen zu den Figuren 1, 2, 3, 4, 5 und 6a analog auch für die in Figur 6b gezeigte Darstellung.

### Bezugszeichenliste

- 1: Laufschaufel-Aufnahme
- 2: Laufschaufel
- 3: Nut
- 4: Dichtfläche an Laufschaufel-Aufnahme
- 5: Dichtfläche an Laufschaufel
- 10: Vorrichtung
- 11: Befestigungsring
- 12: Befestigungsschraube
- 13: Lagerhülse
- 14: Lagerring
- 15: Zahnkranz
- 16: Halterung
- 17: Bearbeitungswerkzeug
- 18: Höhenverstelleinrichtung
- 19: Befestigungsschraube
- 20: Grundkörper
- 21: Führungselement
- 22: Führungsnut
- 23: Aufnahmeelement
- 24: Stützkonstruktion
- 25: Stützhülse
- 26: Gleit- bzw. Rollenelement
- 27: Lagerelement

## Patentansprüche

1. Anordnung mit einer Anlagenturbine und einer Vorrichtung (10) zur mechanischen Bearbeitung einer Dichtfläche (4, 5) an der Anlagenturbine, wobei die Dichtfläche (4, 5) umlaufend auf dem Außendurchmesser einer Laufschaufel (2) und/oder umlaufend auf dem Innendurchmesser einer Laufschaufel-Aufnahme (1) angeordnet ist, wobei die Laufschaufel (2) in der Laufschaufel-Aufnahme (1) angeordnet und im oberen Bereich der Laufschaufel-Aufnahme (1) umlaufend entsprechend einem zur Abdichtung im Betrieb notwendigen Dichtungsquerschnitt zu dieser beabstandet ist, wodurch zwischen der Laufschaufel (2) und der Laufschaufel-Aufnahme (1) in diesem Bereich eine Nut (3) gebildet ist, wobei die mechanische Bearbeitung mittels eines Bearbeitungswerkzeuges (17) durchführbar ist, welches in der Nut (3) und an einer Halterung (16) angeordnet und an der Halterung (16) befestigt ist, **dadurch gekennzeichnet, dass** die Halterung (16) derart ausgebildet ist, dass diese außerhalb des Außendurchmessers der Nut (3) an der Vorrichtung (10) gelagert und befestigt ist.

2. Anordnung nach Anspruch 1, **dadurch gekennzeichnet, dass** das Bearbeitungswerkzeug (17) an der Halterung (16) derart anordbar ist, dass wahlweise die Dichtfläche (5) umlaufend auf dem Außendurchmesser der Laufschaufel (2) oder die Dichtfläche (4) umlaufend auf dem Innendurchmesser der Laufschaufel-Aufnahme (1) bearbeitbar ist.

3. Anordnung nach Anspruch 1 oder 2, **dadurch gekennzeichnet, dass** die Vorrichtung (10) eine Lagereinrichtung umfasst, welche einen außerhalb des Außendurchmessers der Nut (3), vorzugsweise umlaufend, angeordneten Lagerring (14) umfasst.

4. Anordnung nach Anspruch 3, **dadurch gekennzeichnet, dass** die Lagereinrichtung Lagerhülsen (13), in welche der Lagerring (14) im Bereich seines Außendurchmessers eingreift, umfasst.

5. Anordnung nach einem der vorhergehenden Ansprüche, **dadurch gekennzeichnet, dass** die Vorrichtung (10) eine Antriebseinrichtung umfasst, welche einen, vorzugsweise elektrisch betriebenen, Motor umfasst.

6. Anordnung nach einem der vorhergehenden Ansprüche, **dadurch gekennzeichnet, dass** die Vorrichtung (10) ein Zahnradgetriebe umfasst, welches einen außerhalb des Außendurchmessers der Nut (3), vorzugsweise umlaufend, angeordneten Zahnkranz (15) umfasst.

7. Verfahren zur mechanischen Bearbeitung einer Dichtfläche (4, 5) an einer Anlagenturbine, wobei die Dichtfläche (4, 5) umlaufend auf dem Außendurchmesser einer Laufschaufel (2) und/oder umlaufend auf dem Innendurchmesser einer Laufschaufel-Aufnahme (1) angeordnet ist, wobei die Laufschaufel (2) in der Laufschaufel-Aufnahme (1) angeordnet und im oberen Bereich der Laufschaufel-Aufnahme (1) umlaufend entsprechend einem zur Abdichtung im Betrieb notwendigen Dichtungsquerschnitt zu dieser beabstandet ist, wodurch zwischen der Laufschaufel (2) und der Laufschaufel-Aufnahme (1) in diesem Bereich eine Nut (3) gebildet wird, wobei die mechanische Bearbeitung mittels eines Bearbeitungswerkzeuges (17) erfolgt, welches sich während der mechanischen Bearbeitung in der Nut (3) befindet und an einer Halterung (16) angeordnet und befestigt ist, **dadurch gekennzeichnet, dass** die Halterung (16) außerhalb des Außendurchmessers der Nut (3) an der Vorrichtung (10) gelagert und befestigt wird, und die Dichtfläche (5) umlaufend auf dem Außendurchmesser der Laufschaufel (2) oder die Dichtfläche (4) umlaufend auf dem Innendurchmesser der Laufschaufel-Aufnahme (1) bearbeitet wird.

8. Verfahren nach Anspruch 7, **dadurch gekennzeichnet, dass** nacheinander die Dichtfläche (5) umlaufend auf dem Außendurchmesser der Laufschaufel (2) und die Dichtfläche (4) umlaufend auf dem Innendurchmesser der Laufschaufel-Aufnahme (1) bearbeitet werden oder umgekehrt, wobei dazu lediglich das Bearbeitungswerkzeug (17) an der Halterung (16) in radialer Richtung gewendet angeordnet wird.

## Claims

1. Arrangement comprising a system turbine and an apparatus (10) for mechanically machining a sealing surface (4, 5) at the system turbine, wherein the sealing surface (4, 5) is arranged circumferentially on the outer diameter of a rotor blade (2) and/or circumferentially on the inner diameter of a rotor blade receiver (1), wherein the rotor blade (2) is arranged in the rotor blade receiver (1) and is circumferentially spaced from the rotor blade receiver (1) in the upper region thereof in accordance with a sealing cross-section required for sealing during operation, whereby a groove (3) is formed between the rotor blade (2) and the rotor blade receiver (1) in this region, wherein the mechanical machining is executable by means of a machining tool (17) which is arranged in the groove (3) and at a holder (16) and is fastened to the holder (16), **characterised in that** the holder (16) is designed such that it is mounted on and fastened to the apparatus (10) outside the outer diameter of the groove (3).

2. Arrangement as claimed in claim 1, **characterised in that** the machining tool (17) is arrangeable at the holder (16) such that either the sealing surface (5) circumferentially on the outer diameter of the rotor blade (2) or the sealing surface (4) circumferentially on the inner diameter of the rotor blade receiver (1) is machinable.

3. Arrangement as claimed in claim 1 or 2, **characterised in that** the apparatus (10) comprises a bearing device which comprises a bearing ring (14) arranged, preferably circumferentially, outside the outer diameter of the groove (3).

4. Arrangement as claimed in claim 3, **characterised in that** the bearing device comprises bearing sleeves (13), into which the bearing ring (14) engages in the region of its outer diameter.

5. Arrangement as claimed in any one of the preceding claims, **characterised in that** the apparatus (10) comprises a drive device which comprises a motor, preferably electrically operated.

6. Arrangement as claimed in any one of the preceding claims, **characterised in that** the apparatus (10) comprises a gear transmission which comprises a gear ring (15) arranged, preferably circumferentially, outside the outer diameter of the groove (3).

7. Method for mechanically machining a sealing surface (4, 5) at a system turbine, wherein the sealing surface (4, 5) is arranged circumferentially on the outer diameter of a rotor blade (2) and/or circumferentially on the inner diameter of a rotor blade receiver (1), wherein the rotor blade (2) is arranged in the rotor blade receiver (1) and is circumferentially spaced from the rotor blade receiver (1) in the upper region thereof in accordance with a sealing cross-section required for sealing during operation, whereby a groove (3) is formed between the rotor blade (2) and the rotor blade receiver (1) in this region, wherein the mechanical machining is effected by means of a machining tool (17) which, during the mechanical machining, is located in the groove (3) and is arranged at and fastened to a holder (16), **characterised in that** the holder (16) is mounted on and fastened to the apparatus (10) outside the outer diameter of the groove (3), and the sealing surface (5) circumferentially on the outer diameter of the rotor blade (2) or the sealing surface (4) circumferentially on the inner diameter of the rotor blade receiver (1) is machined.

8. Method as claimed in claim 7, **characterised in that** successively the sealing surface (5) circumferentially on the outer diameter of the rotor blade (2) and the sealing surface (4) circumferentially on the inner diameter of the rotor blade receiver (1) are machined or vice versa, wherein, for this purpose, only the machining tool (17) is arranged turned around in the radial direction at the holder (16).

## Revendications

1. Ensemble comprenant une turbine d'installation et un dispositif (10) de traitement mécanique d'une surface d'étanchéité (4, 5) sur la turbine d'installation, la surface d'étanchéité (4, 5) étant disposée circonférentiellement sur le diamètre extérieur d'une pale de rotor (2) et/ou circonférentiellement sur le diamètre intérieur d'un logement de pale de rotor (1), la pale de rotor (2) étant disposée dans le logement de pale de rotor (1) et étant circonférentiellement espacée d'une section transversale d'étanchéité dans la zone supérieure du logement de pale de rotor (1) conformément à ladite section transversale d'étanchéité nécessaire à l'étanchéité pendant le fonctionnement, de sorte qu'entre la pale de rotor (2) et le logement de pale de rotor (1) une rainure (3) est formée dans cette zone, le traitement mécanique pouvant être effectué au moyen d'un outil de traitement (17) qui est disposé dans la rainure (3) et sur un support (16) et fixé au support (16), **caractérisé en ce que** le support (16) est conçu de manière à ce que celui-ci soit monté et fixé sur le dispositif (10) à l'extérieur du diamètre extérieur de la rainure (3).

2. Ensemble selon la revendication 1, **caractérisé en ce que** l'outil de traitement (17) peut être disposé sur le support (16) de manière à ce que puisse être traitée au choix la surface d'étanchéité (5) circonférentiellement sur le diamètre extérieur de la pale de rotor (2) ou la surface d'étanchéité (4) circonférentiellement sur le diamètre intérieur du logement de pale de rotor (1).

3. Ensemble selon la revendication 1 ou 2, **caractérisé en ce que** le dispositif (10) comprend une unité de palier qui comprend une bague de palier (14) disposée, de préférence circonférentiellement, à l'extérieur du diamètre extérieur de la rainure (3).

4. Ensemble selon la revendication 3, **caractérisé en ce que** l'unité de palier comprend des manchons de palier (13) dans lesquels s'engage la bague de palier (14) au niveau de son diamètre extérieur.

5. Ensemble selon l'une des revendications précédentes, **caractérisé en ce que** le dispositif (10) comprend une unité d'entraînement qui comprend un moteur de préférence électrique.

6. Ensemble selon l'une des revendications précédentes, **caractérisé en ce que** le dispositif (10) comprend une transmission à roue dentée qui comprend une couronne dentée (15) disposée, de préférence circonférentiellement, à l'extérieur du diamètre extérieur de la rainure (3).

7. Procédé de traitement mécanique d'une surface d'étanchéité (4, 5) sur une turbine d'installation, la surface d'étanchéité (4, 5) étant disposée circonférentiellement sur le diamètre extérieur d'une pale de rotor (2) et/ou circonférentiellement sur le diamètre intérieur d'un logement de pale de rotor (1), la pale de rotor (2) étant disposée dans le logement de pale de rotor (1) et étant circonférentiellement espacée d'une section transversale d'étanchéité dans la zone supérieure du logement de pale de rotor (1) conformément à ladite section transversale d'étanchéité nécessaire à l'étanchéité pendant le fonctionnement, de sorte qu'entre la pale de rotor (2) et le logement de pale de rotor (1) une rainure (3) est formée dans cette zone, le traitement mécanique étant effectué au moyen d'un outil de traitement (17) qui est situé dans la rainure (3) pendant le traitement mécanique et qui est disposé et fixé à un support (16), **caractérisé en ce que** le support (16) est monté et fixé sur le dispositif (10) à l'extérieur du diamètre extérieur de la rainure (3), et la surface d'étanchéité (5) circonférentiellement sur le diamètre extérieur de la pale de rotor (2) ou la surface d'étanchéité (4) circonférentiellement sur le diamètre intérieur du logement de pale de rotor (1) est traitée.

8. Procédé selon la revendication 7, **caractérisé en ce que** successivement la surface d'étanchéité (5) circonférentiellement sur le diamètre extérieur de la pale de rotor (2) et la surface d'étanchéité (4) circonférentiellement sur le diamètre intérieur du logement de pale de rotor (1) est traitée, ou inversement, seul l'outil de traitement (17) étant pour cela disposé en étant tourné dans la direction radiale sur le support (16).
